# EUROPEAN PATENT SPECIFICATION

(11) **EP 1 488 987 B1**
(45) Date of publication and mention of the grant of the patent: **08.11.2006**
(21) Application number: 03703230.7
(22) Date of filing: 06.02.2003
(51) Int. Cl.: B62D 25/12, B60R 21/34

(54) **HOOD STOPPER STRUCTURE**
ANSCHLAGKONSTRUKTION FÜR MOTORHAUBE
STRUCTURE D'ARRET DE CAPOT

(30) Priority: 28.03.2002 JP 2002092054
(43) Date of publication of application: 22.12.2004
(73) Proprietor: Daihatsu Motor Co., Ltd., Ikeda-shi, Osaka 563-8651 (JP)
(72) Inventor: Ishii, Yoshizumi c/o Daihatsu Motor Co., Ltd., Ikeda-shi, Osaka 563-8651 (JP)
(74) Representative: Haley, Stephen
(86) International application number: PCT/JP2003/001267
(87) International publication number: WO 2003/082654

(56) References cited:
- EP-A- 1 104 726
- WO-A-00/69706
- JP-A- 5 254 461
- JP-A- 8 276 804
- JP-A- 11 336 820
- JP-U- 51 025 312
- JP-U- 56 102 844
- JP-U- 63 151 349
- US-A- 5 706 908

## Description

### TECHNICAL FIELD

The present invention relates to the structure of a hood stopper which absorbs impact in closing a hood such as a bonnet hood of an automobile, and prevents vibration of the hood in a closed state.

### BACKGROUND ART

The structure of a hood stopper in which stopper members made of elastic members are disposed on the side of a car body or a hood is conventionally known, as disclosed in, for example, Japanese Patent Laid-Open Publication No. Hei 9-123945 and the like, in order to absorb impact in closing a hood such as a trunk lid panel, a bonnet hood, and the like of an automobile, and prevent vibration of the hood in a closed state.

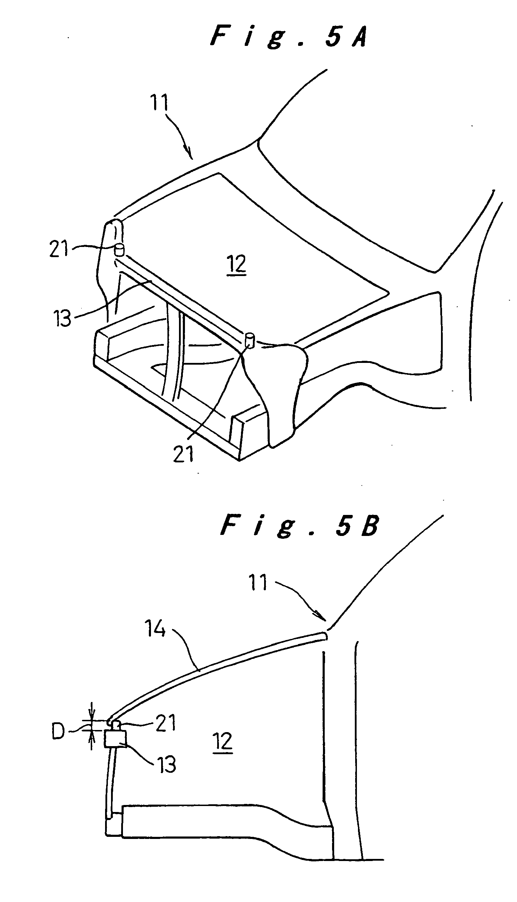

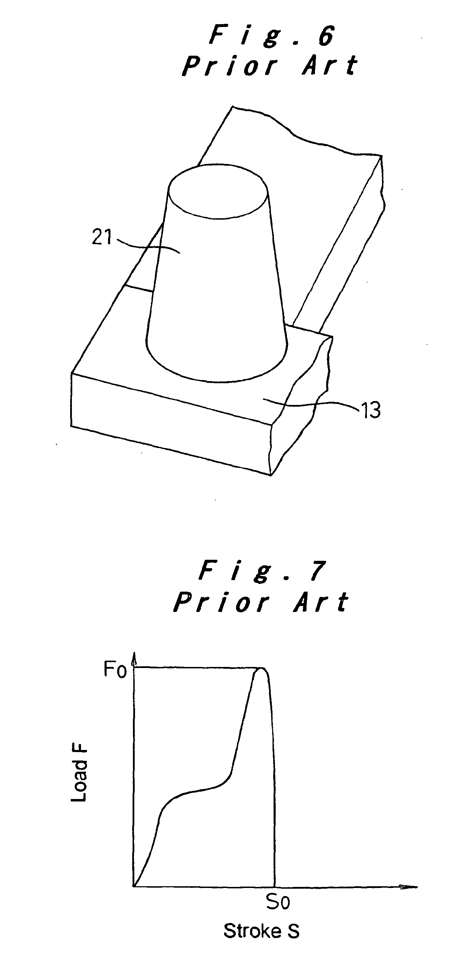

An example of the structure of the hood stopper in the bonnet hood will be described with reference to Figs. 5A, 5B and 6. Stopper members 21 shown in Fig. 6 which are made of elastic members such as hard rubber are disposed on both ends of a radiator support 13, which is disposed, as shown in Fig. 5A, in an upper portion of a front end of an engine room 12 of a car body frame 11. When a bonnet hood 14 is closed as shown in Fig. 5B, these stopper members 21 making contact with the undersurface of a front end of the bonnet hood 14 are elastically compressed by a predetermined amount to absorb impact in closing the bonnet hood 14 and prevent vibration of the bonnet hood 14 in a closed state.

The foregoing structure in which the stopper members 21 made of the hard rubber are disposed on the radiator support 13, however, has a problem that when a pedestrian making contact with an automobile is thrown up on the bonnet hood 14 and clashes against the bonnet hood 14 from above, a degree of injury of the pedestrian increases. Namely, clearance D, which is fairly large with respect to the height of the stopper member 21, exists between the undersurface of the front end of the bonnet hood 14 and the radiator support 13 as shown in Fig. 5B. The stopper 21 has a certain degree of elasticity but has high hardness, so that a stroke S from the contact of the pedestrian with the bonnet hood 14 to the stop thereof, which is represented by So, becomes short. Since collision energy is absorbed in the short stroke So without making effective use of the clearance D, an impact load F becomes large F₀.

In view of the foregoing conventional problem, the present invention has an object of providing the structure of a hood stopper which reduces a degree of injury of an obstruction, when the obstruction crashes onto a hood.

EP-A-1104726, WO-A-00/69706, and US-A-5706908 all disclose hood stoppers with stopper members which are disposed to make contact with a hood in a closed position according to the preamble of claim 1.

According to the present invention there is provided a structure of a hood stopper in which stopper members are disposed so as to make contact with a hood in a closed position of the hood, wherein the stopper member comprises an energy absorption member which absorbs energy while it is plastically deformed, when a load equal to or more than a predetermined value is applied from above; and characterised in that
the energy absorption member is disposed in a case member with a clearance provided between a top end of the energy absorption member and a top end of the case member, wherein the case member is elastically deformed in a vertical direction when a load equal to or less than the predetermined value is applied, and is plastically deformed in the vertical direction when a load equal to or more than the predetermined value is applied.

According to the structure like this, when an obstruction crashing onto the hood applies a load equal to or more than the predetermined value, the energy absorption member is plastically deformed to absorb collision energy, so that it is able to reduce a degree of injury of the obstruction.

The case member satisfies function as the stopper member in a normal use condition. When an impact load equal to or more than the predetermined value is applied, the impact load is certainly absorbed, so that it is possible to reduce the degree of injury of the obstruction.

### BRIEF DESCRIPTION OF THE DRAWINGS

Fig. 1 is a perspective view showing a main portion of the structure of a hood stopper according to an embodiment of the present invention;
Figs. 2A and 2B show components of a stopper member according to the embodiment, Fig. 2A being a perspective view of a case member, Fig. 2B being a perspective view of an energy absorption member;
Figs. 3A to 3C are front views showing respective states of the stopper member according to the embodiment during operation;
Fig. 4 is a graph showing the load characteristics of the stopper member according to the embodiment;
Figs. 5A and 5B show a state of disposing the stopper member on a bonnet hood of an automobile, Fig. 5A being a perspective view, Fig. 5B being a schematic side view in a closed state of the bonnet hood;
Fig. 6 is a perspective view of a conventional stopper member; and
Fig. 7 is a graph showing the load characteristics of the conventional stopper member.

### BEST MODE FOR CARRYING OUT THE INVENTION

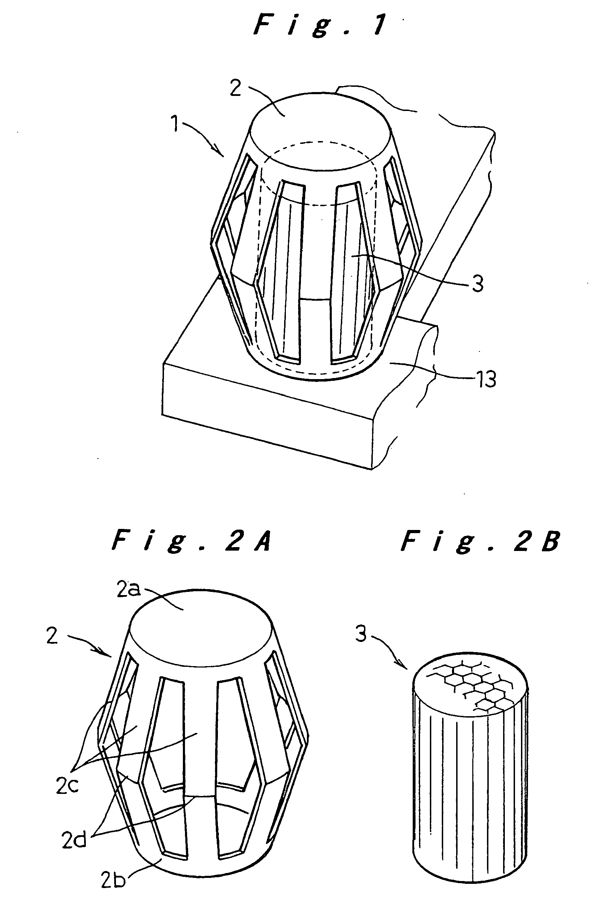

An embodiment of the structure of a hood stopper according to the present invention will be hereinafter described with reference to Figs. 1 to 4. The whole disposition of the structure is the same as that of the conventional example described with reference to Figs. 5A and 5B, so that the description of the whole disposition will be cited by reference. Identical components are referred to by the same reference numerals, and the description of the identical components will be omitted.

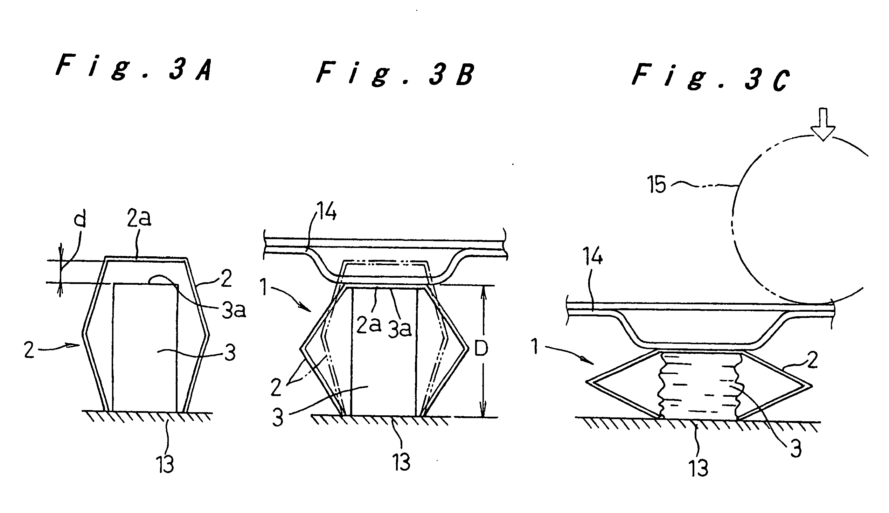

Referring to Fig. 1, the reference numeral 1 denotes a stopper member. The stopper members 1 are disposed on both ends of a radiator support 13 on an upper portion of a front end of an engine room 12, to absorb impact in closing a bonnet hood 14 and prevent vibration of the bonnet hood 14 in a closed state. The stopper member 1 comprises a case member 2 and an energy absorption member 3 contained in the case member 2. The case member 2 is elastically deformed in a vertical direction when a load equal to or less than a predetermined value is applied, and is plastically deformed in the vertical direction when a load equal to or more than the predetermined value is applied. The energy absorption member 3 absorbs energy while it is plastically deformed, when a load equal to or more than the predetermined value is applied from above. An appropriate clearance d, as shown in Fig. 3A, is provided between a top end 3a of the energy absorption member 3 and a top face plate 2a of the case member 2.

The case member 2, as shown in Fig. 2A, is composed of resin molded parts, the whole shape of which is in a vertically long bead on an abacus. To be more specific, a plurality of elastically and plastically bending plates 2c in the shape of an angle bracket, which are disposed at regular intervals in a peripheral direction, couple the top face plate 2a to a bottom ring 2b. The elastically and plastically bending plate 2c has an elastic modulus such that the top face plate 2a is downwardly displaced by a displacement amount approximately corresponding to the foregoing clearance d, when a load of the foregoing predetermined value is applied. The elastically and plastically bending plates 2c are elastically deformed by up to an amount approximately corresponding to the clearance d. When a load equal to or more than the predetermined value is applied and the top face plate 2a is displaced by an amount equal to or more than the foregoing clearance d, the elastically and plastically bending plates 2c are broken or plastically deformed beyond its elastic limit. Thus, a notch, an incision or the like is formed in a bending portion 2d of the elastically and plastically bending plate 2c if needed.

The whole shape of the energy absorption member 3, as shown in Fig. 2B, is cylindrical and the member 3 is made of an aluminum honeycomb member. When a load equal to or more than the predetermined value is applied from above, aluminum foil making the aluminum honeycomb member is buckled, so that the energy absorption member 3 absorbs energy while it is plastically deformed in a large compressive deformation range on the whole. The energy absorption member 3 may be composed of other members having a similar function, such as cylinder blocks made of hard urethane foam, instead of the aluminum honeycomb member.

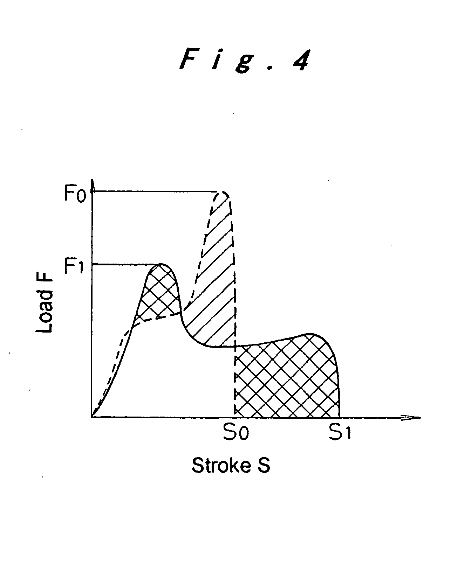

Then, the operation of the foregoing structure will be described with reference to Figs. 3A to 3C and Fig. 4. In a normal condition, when the bonnet hood 14 is opened, the case member 2 is in a normal state shown in Fig. 3A, in which there is the predetermined clearance d between the top face plate 2a of the case member 2 and the top end 3a of the energy absorption member 3. When the bonnet hood 14 is closed, as shown in Fig. 3B, a bottom end of a corresponding portion of the bonnet hood 14 makes contact with the top face plate 2a of the case member 2, and hence the top face plate 2a is pressed downward to a predetermined position against the elasticity of the elastically and plastically bending plates 2c. Therefore, impact in closing the bonnet hood 14 is absorbed during the course of this process, and the elastic resilience of the elastically and plastically bending plates 2c prevents vibration of the bonnet hood 14 in a closed state.

Then, when an obstruction 15 crashing into the automobile is thrown up on the bonnet hood 14, the obstruction 15 crashes onto the bonnet hood 14 and a load equal to or more than a predetermined value is applied to the bonnet hood 14. At this time, as shown in Fig. 3C, the elastically and plastically bending plates 2c of the case member 2 are broken or plastically deformed beyond its elastic limit, and the energy absorption member 3 is plastically deformed by a large amount while absorbing energy. Collision energy is absorbed during the course of this process, so that a degree of injury of the obstruction 15 is reduced. In such a manner, the clearance D between the undersurface of the front end of the bonnet hood 14 and the radiator support 13 is effectively used as an energy absorption area.

According to this embodiment, as shown in Fig. 4, a load F₁ for breaking or plastically deforming the case member 2 beyond its elastic limit from the contact of the obstruction 15 with the bonnet hood 14 to the stop thereof becomes a maximum impact load. After that, the energy absorption member 3 absorbs energy while it is plastically deformed by a predetermined load. A stroke S becomes S₁ which is longer than a conventional stroke So shown by a dashed line. Hence, a diagonally shaded conventional energy absorption area is supplanted by a cross-diagonally shaded energy absorption area. Therefore, a maximum impact load F becomes a load F₁ which is much reduced as compared with a conventional load F₀. Hence, it is possible to reduce the degree of injury of the obstruction 15.

In the description of the foregoing embodiment, the stopper member 1 comprises the case member 2 and the energy absorption member 3 contained in the case member 2. According to circumstances, however, an elastic member that has an appropriate elastic modulus and is relatively small in a vertical direction may be disposed on the top of the energy absorption member 3. It is preferable that the elastic member has a multilayer structure, in which hardness, that is, an elastic modulus gradually varies between the top end and the bottom end. In this case, it is possible to easily and certainly obtain impact absorption effect in closing the bonnet hood 14 and vibration prevention effect, even if the elastic member is small in a vertical dimension.

### INDUSTRIAL APPLICABILITY

According to the structure of a hood stopper of the present invention, the stopper member comprises the energy absorption member for absorbing energy while it is plastically deformed, when a load equal to or more than a predetermined value is applied from above. When the obstruction crashing onto the hood applies a load equal to or more than the predetermined value, the energy absorption members are plastically deformed to absorb collision energy, so that the present invention is adequate for reducing the degree of injury of the obstruction.

## Claims

1. A structure of a hood stopper in which stopper members (1) are disposed so as to make contact with a hood (14) in a closed position of the hood (14), wherein the stopper member (1) comprises an energy absorption member (3) which absorbs energy while it is plastically deformed, when a load equal to or more than a predetermined value is applied from above; and **characterised in that**
the energy absorption member (3) is disposed in a case member (2) with a clearance provided between a top end (3a) of the energy absorption member (3) and a top end (2a) of the case member (2), and that the case member (2) is elastically deformed in a vertical direction when a load equal to or less than the predetermined value is applied, and is plastically deformed in the vertical direction when a load equal to or more than the predetermined value is applied.

## Patentansprüche

1. Aufbau eines Haubenpuffers, bei dem Pufferglieder (1) so angeordnet sind, dass sie mit einer Haube (14) in geschlossenem Zustand der Haube (14) Kontakt haben, wobei das Pufferglied (1) ein Energieabsorptionselement (3) aufweist, das bei einer plastischen Verformung Energie absorbiert, wenn eine Last von oben einwirkt, die gleich oder größer ist als ein vorbestimmter Wert,
**dadurch gekennzeichnet,**
**dass** das Energieabsorptionselement (3) in einem Gehäuseelement (2) mit einem Abstand zwischen einem oberen Ende (3a) des Energieabsorptionselementes (3) und einem oberen Ende (2a) des Gehäuseelementes (2) angeordnet ist und dass das Gehäuseelement (2) in senkrechter Richtung verformt wird, wenn eine Last gleich oder kleiner als der vorbestimmte Wert einwirkt, und plastisch in senkrechter Richtung verformt wird, wenn eine Last gleich oder größer als der vorbestimmte Wert einwirkt.

## Revendications

1. Structure d'un dispositif d'arrêt de capot où des éléments d'arrêt (1) sont disposés de manière à venir en contact avec un capot (14) dans une position fermée du capot (14), dans laquelle l'élément d'arrêt (1) comprend un élément d'absorption d'énergie (3) qui absorbe de l'énergie alors qu'il est plastiquement déformé, lorsqu'une charge supérieure ou égale à une valeur prédéterminée est appliquée à partir du dessus, et **caractérisée en ce que**
l'élément d'absorption d'énergie (3) est disposé dans un élément d'enveloppe (2) avec un espace libre ménagé entre une extrémité supérieure (3a) de l'élément d'absorption d'énergie (3) et une extrémité supérieure (2a) de l'élément d'enveloppe (2), et **en ce que** l'élément d'enveloppe (2) est déformé élastiquement dans une direction verticale lorsqu'une charge inférieure ou égale à la valeur prédéterminée est appliquée et est plastiquement déformé dans la direction verticale lorsqu'une charge supérieure ou égale à la valeur prédéterminée est appliquée.
